# EUROPÄISCHE PATENTSCHRIFT

(11) **EP 1 429 443 B1**
(45) Veröffentlichungstag und Bekanntmachung des Hinweises auf die Patenterteilung: **17.08.2005**
(21) Anmeldenummer: 04003590.9
(22) Anmeldetag: 12.02.1998
(51) Int. Cl.: H02K 3/47, H02K 5/128

(54) **Spaltrohr-Elektromotor mit als Spalttopf ausgebildetem Wicklungsträger**
Canned electric motor with a sleeve beeing the winding support
Moteur électrique à gaine avec une gaine servant de support aux enroulements

(30) Priorität: 17.02.1997 DE 19705974
(43) Veröffentlichungstag der Anmeldung: 16.06.2004
(62) Teilanmeldung aus: 98102395.5
(73) Patentinhaber: WILO AG, 44263 Dortmund (DE)
(72) Erfinder: Kech, Hansjürgen, 58312 Herdecke (DE); Genster, Albert, 45768 Marl (DE); Dreihaus, Uwe, 59067 Hamm (DE)
(74) Vertreter: COHAUSZ DAWIDOWICZ HANNIG & PARTNER

(56) Entgegenhaltungen:
- EP-A- 0 713 282

## Beschreibung

Die Erfindung betrifft einen Elektromotor mit einem Wicklungträger für die Wicklungen des Motorenstators, wobei der Wicklungsträger einen zylindrischen koaxialen Hohlraum aufweist, der an der Endseite zumindest teilweise geschlossen und an der gegenüberliegenden Endseite offen ist, und wobei durch die offene Endseite der Rotor in den Hohlraum hineinreicht.

Solche Elektromotoren mit Innenläufer sind bekannt. Bei diesen bekannten Elektromotoren sind Herstellung und Montage der Statorwicklungen und des gesamten Motors aufwendig.

Aus der EP 0 713 282 A1 ist ein Spaltrohrmotor insbesondere für Pumpen bekannt, mit einem zwischen dem Rotor und dem Ständer angeordneten Spaltrohr insbesondere einem Spalttopf, welches die fördermediumsführende Seite von der elektrischen Antriebsseite trennt, wobei eine Ständerwicklung von einem Ständerblechpaket getragen ist, wobei der Stator einen dünnwandigen hülsenförmigen, insbesondere geblechten Grundkörper aufweist, auf dem gleichmäßig um den Umfang verteilt angeordnete, sich über mindestens einen Teil der axialen Länge des Grundkörpers erstreckende, radial nach außen hin stehende Stege angeordnet sind, die zwischen sich Nuten bilden, in denen die Ständerwicklungen einliegen.

Aufgabe der Erfindung ist es, einen Elektromotor der eingangs genannten Art so zu verbessern, dass bei einer modularen Bauweise der Wicklungsträger mit seinen Wicklungen einfach herstellbar, montierbar und auswechselbar ist. Auch soll eine gute Kühlung des Motors erreicht werden. Ferner soll eine Montage durch Automaten möglich sein.

Diese Aufgabe wird erfindungsgemäß durch einen Elektromotor mit einem Wicklungträger für die Wicklungen des Motorenstators gemäß Anspruch 1 gelöst.

Ein solcher Wicklungsträger ist besonders einfach herstellbar und montierbar. Die einzelnen etwa oval ausgeführten vorgewickelten Wicklungen brauchen nur von außen radial auf den Träger aufgeschoben zu werden.

Bei Spaltrohrmotoren trägt der Wicklungsträger die vollständige Statorwicklung und kann mit dieser auf den Spalttopf aufgeschoben werden. Damit lassen sich vorgefertigte Wicklungen für unterschiedliche Spannungen automatisch auf dem Spalttopf montieren, Wicklungen lassen sich nachträglich ändern oder Wicklungen im Fehlerfall leicht tauschen. Bei einem metallischen Spalttopf» sind die auf dem Wicklungsträger angeordneten Wicklungen (Spulen) gegen diesen elektrisch so isoliert, dass gleichzeitig durch die segmentförmige Gestaltung der Oberfläche (Kühlkanäle) des Wicklungsträgers eine sehr gute Wärmeabfuhr zum Fördermedium im Spalttopf ermöglicht wird.

Handelt es sich um die Ausführung eines Spalttopfes aus Kunststoff muss der Wicklungsträger nicht als eigenständiges Teil auf diesem montiert werden, sondern kann unter Beibehaltung seiner Oberfläschengeometrie auch direkt als Spalttopf ausgebildet sein; d.h. es ist nur ein einziges Kunststoffspritzteil erforderlich.

Bei Pumpenmotoren in Trockenläuferbauweise dient der Wicklungsträger gleichzeitig als vorderer -und hinterer Lagerträger. Die segmentförmige Oberfläche des Wicklungsträgers bildet sogenannte Kühlkanäle zwischen den Wicklungsstellen. Die Rotation des Rotors bewirkt, da mit Hilfe der Kühlkanäle das Kühlmedium (Luft) direkt durch die Wicklungen strömt. Bei geschlossenen nicht oberflächenbelüfteten Motoren lässt sich damit ein innerer Kühlkreislauf aufbauen, mit dem die Maschine gekühlt wird. Durch entsprechende Gestaltung der stirnseitigen Rotorgeometrie (angespritzte Stege, Lüfter) kann die Kühlwirkung noch verstärkt werden.

Besonders vorteilhaft ist es, wenn die zumindest zum Teil geschlossene Endseite die elektrischen Anschlüsse für die Enden der Wicklungsdrähte trägt.

Hierbei können die Anschlussteile als Steckkontakte ausgebildet sein, in die Anschlussverbindungen wie die der Motor- und Steuerelektronik und/oder die Netzanschlussverbindungen kontaktierbar sind. Damit sind beim Wicklungsträger die Anschlussteile als Steckkontakte ausgebildet, in die die modular aufgebaute Motor- und Steuerelektronik sowie die Netzanschlussverbindung kontaktiert werden kann. Zusätzliche Schaltverbindungen zwischen Wicklung und Motorelektronik (Kommutierungselektronik) wie bei klassischen Motoraufbauten bekannt, können somit entfallen. Die geometrische Gestaltung des Wicklungsträgers ermöglicht die genaue Position von Zusatzelementen wie z. B. Wicklungsschutz (PCTs') oder zusätzlichen Sensoren (Hallgeber, Temperaturfühler...); die Anschlussenden dieser Elemente können in gleicher Form wie die Wicklungsenden an einer zentraler Kontaktleiste im Wicklungsträger angeordnet werden.

Besonders vorteilhaft ist es hierbei, wenn in die Stirnseite des Motorgehäuses, die dem Pumpen- oder Lüfterlaufrad abgewandt ist, von außen koaxial ein elektrisches Anschlussmodul einschiebbar ist, das elektrische Anschlussteile und elektronische Bauteile auf weist.

Von Vorteil ist, wenn die zwischen den Wicklungen liegenden Stäbe Trennwände zwischen den Wicklungen bilden. Auch können die Vorsprünge tragenden Stäbe außerhalb des jeweiligen Vorsprungs weniger weit in radialer Richtung nach außen vorstehen als die Stäbe, die die Trennwände bilden. Ferner können die Vorsprünge einen nach außen sich öffnenden Hohlraum bilden, in den ein Führungsfinger für die automatische Wicklungsmontage steckbar ist.

Ausführungsbeispiele der Erfindung sind in den Zeichnungen dargestellt und werden im folgenden näher beschrieben.

Es zeigen:
- Figur 1: einen axialen Schnitt durch eine einen Spalttopf aufweisende Motorkreiselpumpe im demontierten Zustand,
- Figur 2: eine schematische Darstellung durch eine Motorkreiselpumpe mit Spalttopf,
- Figur 3: eine schematische Darstellung durch einen Lüfter,
- Figur 4: eine Ansicht der teilweise geschlossenen Endseite des Wicklungsträgers ohne Wicklungen,
- Figur 5: eine Seitenansicht des Wicklungsträgers ohne Wicklungen,
- Figur 6: eine Ansicht der offenen Endseite des Wicklungsträgers ohne Wicklungen.

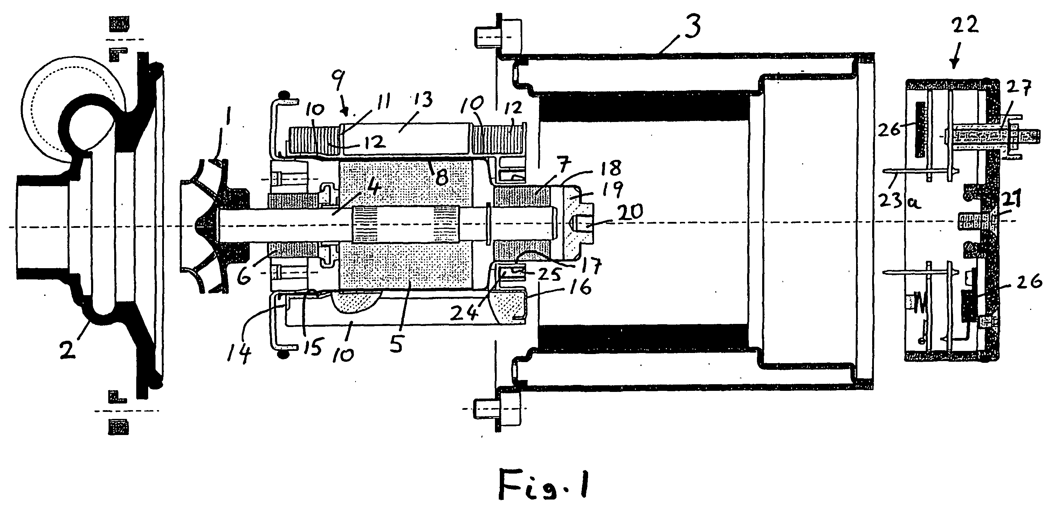

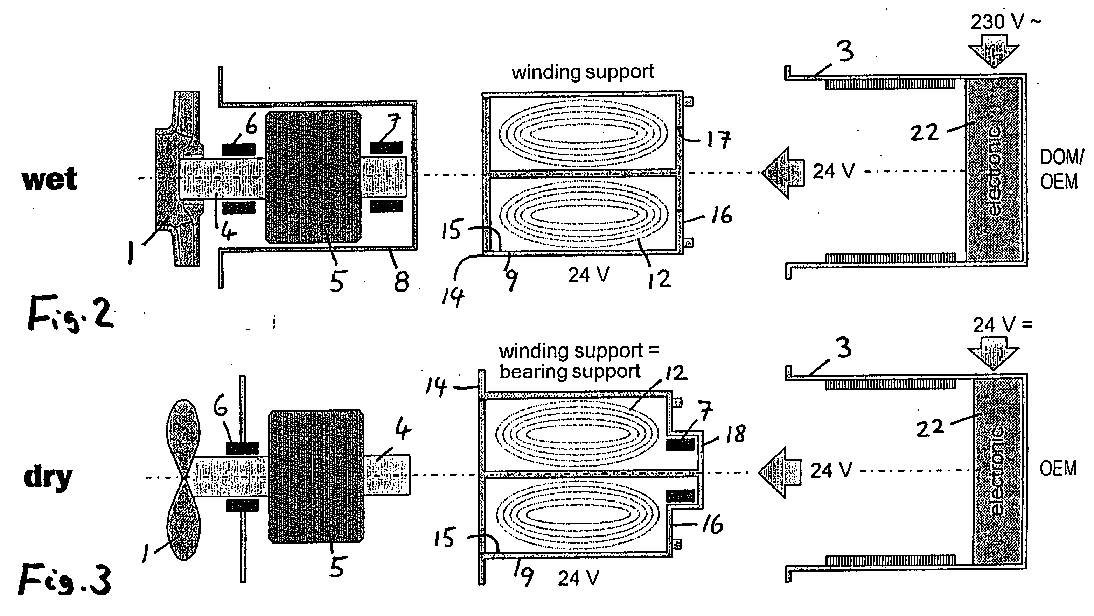

Bei der in Figuren 1 und 2 dargestellten Motorkreiselpumpe liegt das Pumpenlaufrad 1 im inneren eines Pumpengehäuses 2, an dem ein Motorgehäuse 3 angeflanscht ist. Das Pumpenlaufrad 1 sitzt auf dem Ende einer Motorwelle 4, die den Motorenrotor 5 trägt und in Lagern 6,7 gehalten ist.

Motorwelle 4, Rotor 5 und die Lager 6,7 liegen innerhalb eines Spalttopfes 8 auf dessen Außenseite ein Wicklungsträger 9 geschoben ist. Der Wicklungsträger 9 besteht aus Kunststoff oder Metall und besitzt am Umfang achsparallele Stäbe 10, die in regelmäßigen Abständen angeordnet sind. An einigen Stäben 10 insbesondere an jedem zweiten Stab sind längliche achsparallele und nach außen vorstehende Vorsprünge 11 angeformt, auf denen jeweils eine ovale Wicklung 12 mit ihrer inneren länglichen Öffnung von außen insbesondere in radialer Richtung aufgeschoben ist. Hierbei weisen die Vorsprünge 11 nach außen sich öffnende Hohlräume (Vertiefungen) 13 auf, in die ein Führungsfinger für die automatische Wicklungsmontage steckbar ist.

Jeder zweite achsparallele Stab 10, der keinen Vorsprung 11 aufweist bildet jeweils eine zwischen den Wicklungen liegende Trennwand, so dass benachbarte Wicklungen einander nicht berühren können. Hierbei stehen die die Vorsprünge tragenden Stäbe 10, außerhalb des jeweiligen Vorsprungs weniger weit in radialer Richtung nach außen vor als die Stäbe 10, die die Trennwände bilden.
Der in etwa zylindrisch bzw. topfförmig ausgeführte Wicklungsträger 9 besitzt eine erste offene Endwand 14 durch deren mittige Öffnung 15 der Rotor 5 mit Welle 4 und Lagern 6,7 einsteckbar ist. Die gegenüberliegende Endwand 16 des Wicklungsträgers 9 ist teilweise geschlossen, d.h. sie besitzt eine kleinere mittige koaxiale Öffnung 17, in der (entsprechend Figur I) ein topfförmiger koaxialer Bereich 18 des Spalttopfes 8 hineinragt bzw. hindurchragt, dessen Durchmesser kleiner ist als der übrige Durchmesser des Spalttopfes 8. Im Inneren des Bereiches 18 befindet sich das Lager 7 der Welle 4.

An der äußeren Stirnseite des Bereiches 18, ist ein Befestigungsstück 19 innen angeordnet, in dem sich eine sich nach außen öffnende koaxiale Gewindebohrung 20 befindet, in die eine Schraube 21 eines elektrischen Anschlussmoduls 22 eindrehbar ist. Hierbei weist das Motorgehäuse auf der dem Pumpengehäuse 2 abgewandten Seite eine sich zur äußeren Motorgehäusestirnseite sich öffnende Ausnehmung 23 auf, in die das Anschlussmodul 22 vollständig einschiebbar ist. Im eingeschobenen Zustand übergreift das Anschlussmodul 22 den über den Wicklungsträger 9 herausragenden Teil des topfförmigen Bereiches 18 des Spalttopfes 8.

Auf der dem Wicklungsträger 9 zugewandten Seite weist das Anschlussmodul 22 Kontaktteile 23a auf, die als Steckkontakte in Öffnungen 24 an der Endwand 16 des Wicklungsträgers 9 hineinragen. Hierzu bildet die Endwand 16 in dem die mittige Öffnung 17 umgebenden Rand mehrere Öffnungen 24 mit darin einliegenden elektrischen Kontakten 25, die an die Wicklungen angeschlossen sind.

Das Anschlussmodul 22 besitzt darüber hinaus elektronische Bauteile 26 und vorzugsweise einen Stromanschluss 27. Das Anschlussmodul 22 ist damit genauso wie alle übrigen Teile in axialer insbesondere koaxialer Richtung montierbar.

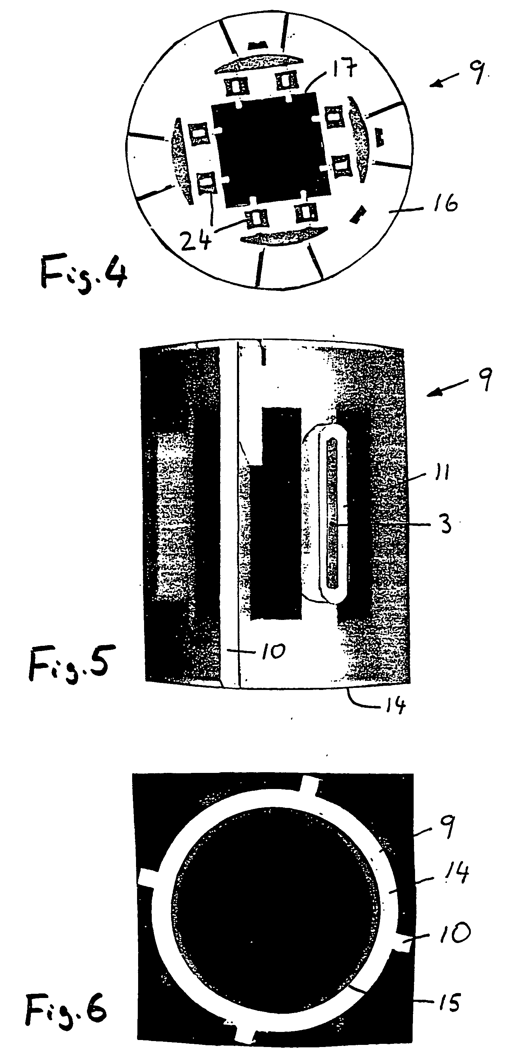

Wird der beschriebene Elektromotor bei einem Lüfter verwendet, so fehlt, wie in Figur 3 dargestellt, der Spalttopf 8. Der Motorenrotor 5 liegt mit seiner Welle 4 im Wicklungsträger 9 ein und das dem Laufrad l abgewandte Lager 7 wird nicht vom Spalttopf 8, sondern direkt vom Wicklungsträger 9 dadurch getragen, dass das Lager 7 in der Öffnung 17 der Endwand 16 genauso wie der topfförmige Bereich 18 formschlüssig und/oder kraftschlüssig (klemmend) einliegt. Im übrigen ist beim Ausführungsbeispiel nach Figur 3 der Wicklungsträger 9 gleich oder ähnlich ausgeführt und das Anschlussmodul 22 ist in gleicher Weise angeordnet und montierbar.

## Patentansprüche

1. Spaltrohrelektromotor mit einem Wicklungsträger (9) für die Wicklungen des Stators, wobei der Wicklungsträger einen zylindrischen, mit dem Rotor koaxialen Hohlraum aufweist, der an einer ersten Endseite (14) offen ist, wobei durch die offene Endseite der Rotor (5) in den Hohlraum hineinreicht, und der Hohlraum an der gegenüberliegenden Endseite (16) eine mit dem Rotor koaxiale Öffnung aufweist, deren Durchmesser kleiner ist als die Öffnung der ersten Endseite (14), **dadurch gekennzeichnet, dass** am Wicklungsträgerumfang achsparallel und in radialer Richtung nach außen abwechslungsweise Vorspünge (11) und Trennwände in Abständen angeordnet sind, wobei auf jedem Vorsprung (11) jeweils eine Wicklung (12) mit ihrer inneren länglichen Öffnung von außen, insbesondere in radialer Richtung, aufschiebbar ist, wobei die Vorsprünge (11) in axialer Richtung kürzer sind als die Trennwände, so dass benachbarte Wicklungen (12) einander nicht berühren können, und wobei der Wicklungsträger (9) als Spalttopf ausgebildet ist.

2. Elektromotor nach Anspruch 1, **dadurch gekennzeichnet, dass** der Wicklungsträger (9) als Kunststoffspritzteil ausgeführt ist.

3. Elektromotor nach Anspruch 1 oder 2, **dadurch gekennzeichnet, dass** in die Öffnung mit kleinerem Durchmesser ein Lager (7) für die Rotorwelle (4) oder ein abgestuftes Ende (18) eines Spalttopfes (8) einschiebbar ist.

4. Elektromotor nach einem der vorherigen Ansprüche, **dadurch gekennzeichnet, dass** insbesondere bei Spaltrohrmotoren der Wicklungsträger (9) die vollständige Statorwicklung trägt.

5. Elektromotor nach einem der vorherigen Ansprüche, **dadurch gekennzeichnet, dass** die zumindest zum Teil geschlossene Endseite (16) die elektrischen Anschlüsse (25) für die Enden der Wicklungsdrähte trägt.

6. Elektromotor nach Anspruch 5, **dadurch gekennzeichnet, dass** die Anschlussteile (25) als Steckkontakte ausgebildet sind, in denen Anschlussverbindungen wie die der Motor- und Steuerelektronik und/oder der Netzanschlussverbindung kontaktierbar sind.

7. Elektromotor nach Anspruch 5 oder 6, **dadurch gekennzeichnet, dass** in die Stirnseite des Motorengehäuses, die dem Pumpen- oder Lüfterlaufrad abgewandt ist, von außen koaxial ein elektrisches Anschlussmodul (22) einschiebbar ist, das elektrische Anschlussteile (27) und elektronische Bauteile (26) aufweist.

8. Elektromotor nach einem der vorherigen Ansprüche, **dadurch gekennzeichnet, dass** die Vorsprünge (11) einen nach außen sich öffnenden Hohlraum (13) bilden, in den ein Führungsfinger für die automatische Wicklungsmontage steckbar ist.

## Claims

1. Canned electric motor with a winding support (9) for the stator windings, and the winding support comprises a cylindrical hollow area which is coaxial relative to the rotor and which is open on a first end side (14), and the rotor (5) reaches through the open end side into the hollow area, and the hollow area has at the opposite end side (16) an opening which is coaxial relative to the rotor and the diameter of which is smaller than the opening of the first end side (14), **characterised in that** at the winding support periphery are spaced axis-parallel and in radial direction outwardly alternating protrusions (11) and separating walls, and onto each protrusion (11) can be pushed from the outside, in particular in radial direction, a respective winding (12) with its inner elongating opening, and the protrusions (11) are in axial direction shorter than the separating walls so that adjacent windings (12) cannot make contact with each other, and the winding support (9) is designed as a canned pot.

2. Electric motor according to Claim 1, **characterised in that** the winding support (9) is a plastic injection-moulded part.

3. Electric motor according to Claim 1 or 2, **characterised in that** into the opening of smaller diameter is inserted a bearing (7) for the rotorshaft (4) or a stepped end (18) of a canned pot (8).

4. Electric motor according to one of the above claims, **characterised in that** in particular in canned motors the winding support (9) supports the complete stator winding.

5. Electric motor according to one of the above claims, **characterised in that** the at least partially closed end side (16) holds the electric connections (25) for the ends of the winding wires.

6. Electric motor according to Claim 5, **characterised in that** the connecting parts (25) are designed as plug contacts wherein connections of the motor or control electronics and/or the mains connection can be established.

7. Electric motor according to Claim 5 or 6, **characterised in that** into the end side of the motor housing facing away from the pump or ventilator wheel is pushed from the outside and coaxially an electric connection module (22) which comprises electric connecting points (27) and electronic components (26).

8. Electric motor according to one of the above claims, **characterised in that** the protrusions (11) form an outwardly widening hollow area (13) into which is pushed a guide finger for automatic winding assembly.

## Revendications

1. Moteur électrique à gaine avec un support de bobinages (9) pour les bobinages du stator, le support de bobinages présentant un volume creux cylindrique coaxial au rotor qui est ouvert à sa première face d'extrémité (14), le rotor (5) s'étendant à l'intérieur du volume creux à travers la face d'extrémité ouverte du rotor (5) et le volume creux présentant à la face d'extrémité (16) opposée une ouverture coaxiale au rotor dont le diamètre est plus petit que l'ouverture de la première face d'extrémité (14),
**caractérisé par le fait que** des saillies (11) et des parois de séparation sont disposées à axes parallèles et de manière alternée vers l'extérieur en direction radiale sur la périphérie du support de bobinages à espacements, un bobinage (12) pouvant être enfilé, en particulier en direction radiale, respectivement sur chaque saillie (11) par son ouverture intérieure oblongue, les saillies (11) étant plus courtes en direction axiale que les parois de séparation de telle sorte que des bobinages (12) adjacents ne peuvent pas se toucher, et le support de bobinages (9) étant conformé en tant que pot d'entrefer.

2. Moteur électrique selon la revendication 1,
**caractérisé par le fait que** le support de bobinages (9) est réalisé sous forme de pièce moulée par injection en matière synthétique.

3. Moteur électrique selon la revendication 1 ou 2,
**caractérisé par le fait qu'**un palier (7) pour l'arbre de rotor (4) ou une extrémité (18) étagée d'un pot d'entrefer (8) peut être enfoncé dans l'ouverture de plus petit diamètre.

4. Moteur électrique selon l'une des revendications précédentes,
**caractérisé par le fait que**, en particulier dans le cas de moteurs à gaine, le support de bobinages (9) porte la totalité de la bobine statorique.

5. Moteur électrique selon l'une des revendications précédentes,
**caractérisé par le fait que** la face d'extrémité (16) au moins partiellement fermée porte les connexions électriques (25) pour les extrémités des câbles des bobinages.

6. Moteur électrique selon la revendication 6,
**caractérisé par le fait que** les pièces de connexion (25) sont conformées en tant que contacts enfichables dans lesquels des liaisons de connexion, telles que celles de l'électronique de moteur et de commande et/ou la liaison de connexion au réseau, peuvent être mises en contact.

7. Moteur électrique selon la revendication 5 ou 6,
**caractérisé par le fait qu'**un module de connexion (22) électrique, qui présente des pièces de connexion (27) et des composants électroniques (26), peut être enfoncé de l'extérieur coaxialement dans la face frontale du carter de moteur qui est écartée de la roue mobile de pompe ou de ventilateur.

8. Moteur électrique selon l'une des revendications précédentes,
**caractérisé par le fait que** les saillies (11) forment un volume creux (13) s'ouvrant vers l'extérieur dans lequel peut être enfiché un doigt de guidage pour le montage automatique des bobinages.
